# EUROPEAN PATENT APPLICATION

(11) **EP 3 521 661 A1**
(43) Date of publication of application: **07.08.2019**
(21) Application number: 19153526.9
(22) Date of filing: 24.01.2019
(51) Int. Cl.: F16H 55/24, F16H 57/021, F16H 57/022, F16H 57/12

(54) **WORM GEAR ASSEMBLY HAVING BACKLASH CONTROL STRUCTURE AND POP-UP ANTENNA INCLUDING THE SAME**

(30) Priority: 31.01.2018 KR 20180011798
(71) Applicant: Park, Chan Goo, Daejeon 34033 (KR)
(72) Inventor: PARK, Chan Goo, 34033 Daejeon (KR); YOON, Sae Won, 34185 Daejeon (KR); PARK, Byoung Gu, 16699 Suwon-si (KR); PARK, Hyun Kuk, 34569 Daejeon (KR); KIM, Jin Ho, 32746 Geumsan-eup (KR)
(74) Representative: Bertsch, Florian Oliver

(57) **Abstract**

Provided are a worm gear assembly having a backlash control structure and a pop-up antenna including the same, and more particularly, a worm gear assembly having a backlash control structure and a pop-up antenna including the same, for preventing vibration of a backlash due to driving of the worm gear assembly by installing the backlash control structure disposed at one side of a worm shaft on a body for accommodating a worm shaft and a worm wheel and applying elastic force to push the worm of the worm shaft and the worm wheel toward each other to appropriately adjust a backlash formed between the worm and the worm wheel.

## Description

### TECHNICAL FIELD

The present invention relates to a worm gear assembly having a backlash control structure and a pop-up antenna including the same, and more particularly, to a worm gear assembly having a backlash control structure and a pop-up antenna including the same, for preventing vibration during driving of a worm wheel due to a backlash between screw threads by which the worm and the worm wheel of the worm gear assembly are engaged, for adjusting an elevation of an antenna of a pop-up antenna and a low noise block down converter (LNB).

### BACKGROUND

A backlash refers a clearance between saw tooth surfaces when a pair of gears are engaged with each other and, in this regard, when a backlash is too small, friction between saw tooth surfaces is increased due to insufficient lubrication, and when a backlash is too large, a gear is likely to be easily damaged due to poor gear engagement. Accordingly, to smoothly rotate a pair of gears engaged with each other, there is a need to control an appropriate backlash, and in general, the thickness of a gear and the number of teeth of engaged gears are adjusted to form a backlash as required for gear design, but when the clearance is further increased compared with a desired degree due to processing tolerance, abrasion, assembly tolerance, and so on, gears are engaged and vibration occurs in a state in which power is not transmitted.

In general, a satellite receiver installed in a vehicle such as an automobile or a train tracks an artificial satellite and receives a satellite signal from the artificial satellite to watch satellite broadcast, and in this case, a device for adjusting an azimuth and an elevation of an antenna is installed in a body of an antenna. In this case, an antenna type is classified into an in-motion antenna that corrects a position thereof using a gyro sensor or the like during movement of a vehicle and a positioner antenna that is spread and receives a satellite signal in a stationary state after tracking. The pop-up antenna is a positioner antenna type that lifts up an antenna that is folded in a stationary state after movement and is operated to maintain a position of the antenna, and thus, the antenna that completely tracks a satellite is left for a long time while being spread. In this case, when a backlash of a worm gear is large, there is a problem in that vibration occurs in a worm gear due to an external disturbance which generates noise during reception of an antenna and a creaking sound and vibration of an antenna installed at a ceiling of a vehicle are heard in the vehicle which causes inconvenience to a user.

In addition, an elevation adjustment device of an antenna mainly uses a gear-type motor in which a worm and a worm wheel are engaged with each other, the gear-type elevation adjustment device is configured in such a way that a frame for supporting an antenna is coupled to an elevation axis for receiving power from the gear-type motor to adjust an elevation, and thus, is simplest in terms of a structure, but there is a problem in that an elevation is not stably adjusted due to shaking of the antenna by as much as a backlash between gears due to inertia and this adversely affects smooth reception of a satellite signal.

Accordingly, to overcome the above problem, KR 10-1699532 B1(An Antenna Assembly for a Vehicle, January 18, 2017) and KR 2005-0116924 A(An Elevation Controlling Device for Satellite Tracking Antenna, December 14, 2005) disclose a method of replacing transmission force between gears for applying rotatory power in an opposing direction to a rotatory direction between engaged worm wheels with a wire or a belt to prevent the above vibration of an antenna due to a backlash. However, such conventional methods for overcoming the problem in terms of a backlash do not directly control a backlash between a worm and a worm wheel, and thus, an additional space and a complex configuration are formed to install a wire and a belt on a worm wheel and to cause a problem in terms of economy and to disadvantageously increase a space occupied by a volume of a driver.

### [Cited Reference]

### [Patent Document]

KR 10-1699532 B1 (2017.01.25.)
KR 2005-0116924 A (2017.12.14.)

### SUMMARY

An embodiment of the present invention is directed to providing a worm wheel assembly having a backlash control structure and a pop-up antenna including the same, for providing a backlash control structure disposed on a body including a worm wheel installed therein for adjusting a backlash between a worm and a worm wheel to prevent vibration of a backlash due to abrasion and design tolerance of a gear and to push the worm and the worm wheel toward each other that are continuously engaged even when being used for a long time, thereby increasing the durability and lifetime of the worm gear assembly.

The present invention relates to a worm gear assembly having a backlash control structure and a pop-up antenna including the same.

In one general aspect, a worm gear assembly having a backlash control structure includes a worm shaft 100 including a worm 110, a worm wheel 200 installed on a drive shaft 210 disposed to be perpendicular to a longitudinal direction of the worm shaft 100 and formed to be engaged with the worm 110, and a backlash control structure 300 that is disposed at one side in the longitudinal direction of the worm shaft 100 and pressurizes the worm shaft 100 in a direction toward the worm wheel 200 to push the worm 110 and the worm wheel 20 toward each other.

The worm gear assembly 1000 may further include a bearing 120 that is formed to surround an outer surface of the worm shaft 100 at one side in the longitudinal direction of the worm shaft 100 and a driver body 400 that accommodate the worm shaft 100 and the worm wheel 200 therein and is configured in such a way that a worm shaft support groove 410 accommodate the bearing 120 at one side of the worm shaft 100 in the longitudinal direction of the worm shaft 100.

the driver body 400 may include shaft coupling grooves 420 that is configured that opposite sides of the drive shaft 210 extended in a longitudinal direction of the drive shaft 210 are fixedly inserted thereinto.

The backlash control structure 300 may include a bearing housing 310 including an upper housing 311 disposed at an upper end of one side of the driver body 400 and extending in the longitudinal direction of the drive shaft 210 by a predetermined length and a lower housing 312 integrated into the upper housing 311 and having a bearing coupling hole 313 with the bearing 120 of the worm shaft 100 inserted thereinto and coupled thereto, an elastic adjustment bolt 320 formed through from an upper end to a lower end of the upper housing 311 to be coupled to an upper end of one side of the driver body 400 and to prevent the bearing housing 310 from being separated, and an elastic spring 330 formed to surround an outer surface of the elastic adjustment bolt 320 and disposed between a lower end of the upper housing 311 and an upper end of one side of the driver body 400.

The backlash control structure 300 may further include a separation prevention ring 340 that is coupled to surround an outer surface of the worm shaft 100 at an outer side of the bearing 120 and prevents the bearing 120 from being separated.

The backlash control structure 300 may be configured in such a way that a worm shaft support groove 410 of the driver body 400 is formed to correspond to the lower housing 312 to allow the lower housing 312 of the bearing housing 310 to be inserted thereinto.

In another general aspect, the backlash control structure 300 may be configured in such a way that a lower housing 312 of the bearing housing 310 is formed to be bent outward along an outer surface of the driver body 400 and is formed to allow the bearing 120 of the worm shaft 100 to be inserted into the bearing coupling hole 313 of the lower housing 312.

The bearing housing 310 may further include a bearing cover 350 that is screwed to an upper end of the upper housing 311, is spaced apart from an outer surface of the bearing housing 310, and extends along the outer surface of the bearing housing 310 to surround an outer side end portion of the worm shaft 100.

The bearing housing 310 may further include a bent end 314 formed by bending a portion of a lower portion of the lower housing 312 in an external direction of the driver body 400.

The bearing housing 310 may be configured in such a way that the bearing coupling hole 313 extends by a predetermined distance in an external direction from a bent line of the lower housing 312, along which the bent end 314 of the lower housing 312 is bent, to accommodate an external side portion of the worm shaft 100.
An angle θ between a bent point of the bearing coupling hole 313 and an imaginary line in the longitudinal direction of the drive shaft 210 from a circle center of the bearing coupling hole 313 may be calculated in consideration of a diameter of the bearing 120, a length of an external side end of the worm shaft 100 protruding outside the lower housing 312, and a diameter of the worm shaft 100. A pop-up antenna including the worm gear assembly 1000 having the backlash control structure 300 may include an antenna 10 for collecting a satellite signal; and a low noise block down converter (LNB) 20 for receiving a signal from the antenna. In this case, the antenna 10 and the LNB 20 may be coupled to opposite side ends of the drive shaft 210 of a worm gear assembly 1000, and an elevation of the antenna 10 and the LNB 20 may be adjusted by driving of the worm gear assembly 1000.

### BRIEF DESCRIPTION OF THE DRAWINGS

FIG. 1 is a perspective view showing a pop-up antenna including a worm gear assembly according to the present invention.
FIG. 2 is a diagram showing the configuration of a worm gear assembly according to an exemplary embodiment of the present invention.
FIG. 3 is a front view of a worm gear assembly according to an exemplary embodiment of the present invention worm gear assembly.
FIG. 4 is a cross-sectional view taken along line AA' of FIG. 3.
FIG. 5 is a cross-sectional view taken along line BB' of FIG. 4.
FIG. 6 is a perspective view showing the bearing housing according to the second embodiment of the present invention.
FIG. 7 is a coupled perspective view of the bearing housing shown in FIG. 6.
FIG. 8 is a perspective view of a bearing housing according to the third embodiment of the present invention.
FIG. 9 is a front view of the bearing housing of FIG. 8.

### DETAILED DESCRIPTION OF EMBODIMENTS

Hereinafter, the present invention will be described in detail by explaining exemplary embodiments of the invention with reference to the attached drawings

The attached drawings are merely an example to explain the technical features of the present invention in more detail and thus should not be construed as limited to the attached drawings.

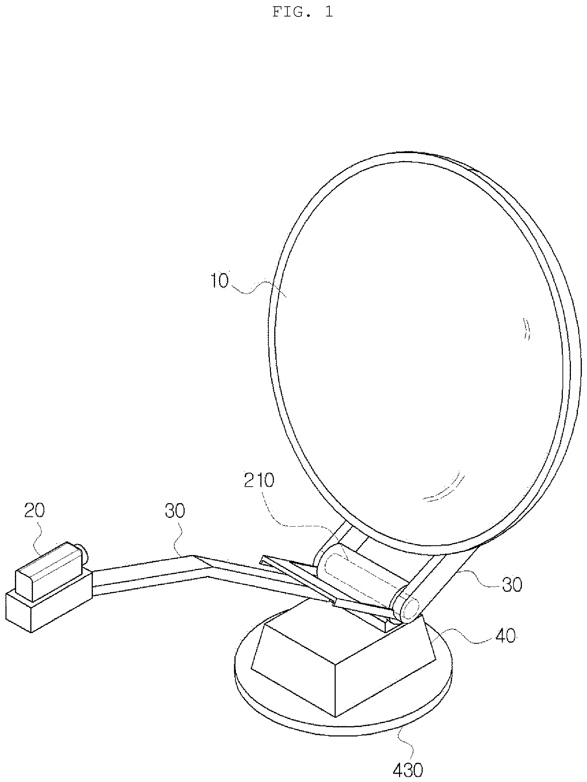

The present invention relates to a worm gear assembly 1000 having a backlash control structure and a pop-up antenna including the same, and referring to FIG. 1, the pop-up antenna may include a lower plate 430, an antenna driver cover 40 formed on the lower plate 430, an antenna 10 for collecting a satellite signal, a low noise block down converter (LNB) 20 for receiving a signal from the antenna, and LNB arms 30 for coupling the antenna 10 and the LNB 20 to opposite side ends of a drive shaft 210 of a worm gear assembly 1000 disposed inside the antenna driver cover 40.

An elevation of the antenna 10 and the LNB 20 may be adjusted by driving of the worm gear assembly 1000. In this case, the elevation refers to an angle between the ground and a radio wave for receiving a satellite signal received by the antenna 10, and in this case, a satellite reception angle may be adjusted while angles of the antenna 10 and the LNB arm 30 are fixed to a predetermined angle and the antenna 10 is lifted up. In addition, when the antenna 10 is folded in a non-driving state, the LNB arm 30 and the antenna 10 may be attached to the lower plate 430, and when the antenna 10 is driven, the LNB arm 30 may be operated to be lifted up simultaneously while the antenna 10 is lifted up. In this case, the LNB 20 may be a component for receiving a radio frequency (RF) satellite signal and down-converting the signal into an IF signal, and simultaneously, may function as a low-noise amplifier.

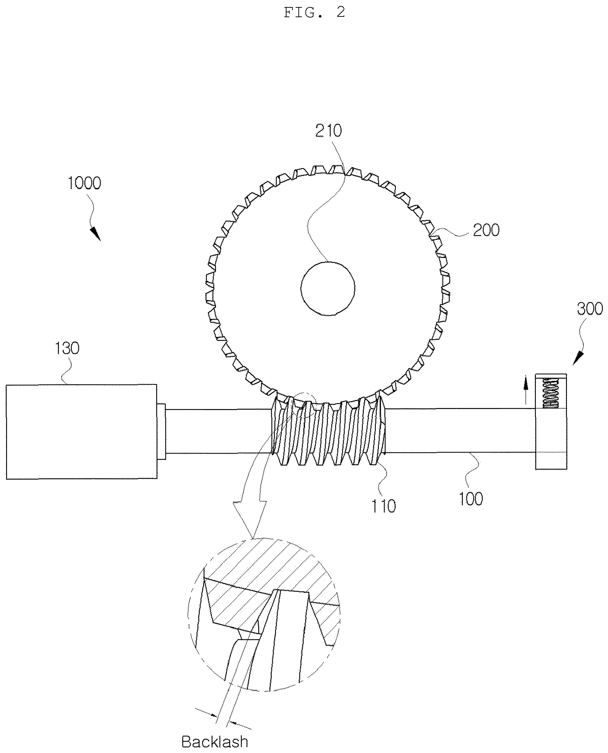

FIG. 2 is a diagram showing the configuration of the worm gear assembly 1000 according to an exemplary embodiment of the present invention. Referring to FIG. 2, the worm gear assembly 1000 may include a worm shaft 100 including a worm 110 on which a spiral screw thread is formed on an outer circumferential surface thereof, a worm wheel 200 installed on the drive shaft 210 disposed to be perpendicular to a longitudinal direction of the worm shaft 100 and formed to be engaged with the worm 110, and a backlash control structure 300 that is disposed at one side in the longitudinal direction of the worm shaft 100 and pressurizes the worm shaft 100 in a direction toward the worm wheel 200 to push the worm 110 and the worm wheel 200 toward each other.

In this case, the worm shaft 100 may be connected to a motor for transmitting driving force to rotate the worm 110, and thus, the worm wheel 200 engaged with the worm 110 may be rotated to be perpendicular to a rotation direction of the worm 110 according to rotation of the worm 110.

The worm shaft 100 according to the present invention may be disposed below the worm wheel 200. In this case, an installation direction of the worm shaft 100 and the worm wheel 200 may be any direction as long as the worm shaft 100 and the worm wheel 200 are engaged with each other irrespective of up, down, left, and right directions, and the illustrated installation direction of the worm shaft 100 and the worm wheel 200 may be changed in various forms without departing from the feature of the present invention.

As shown in FIG. 2, when the worm shaft 100 is disposed below the worm wheel 200, a clearance formed by engaging the worm 110 and the worm wheel 200 with each other may be widened to increase a backlash due to an installation tolerance for fixing the worm shaft 100 and a clearance because of abrasion occurring via long-term rotation, and in this case, the backlash control structure 300 may press the worm shaft 100 in a direction toward the worm wheel 200 to push the worm 110 and the worm wheel 200 toward each other, thereby reducing the backlash between the worm 110 and the worm wheel 200.

### <First Embodiment>

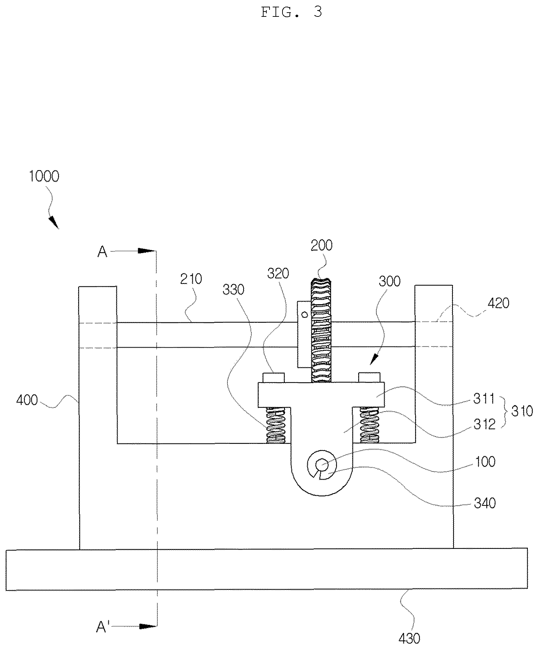

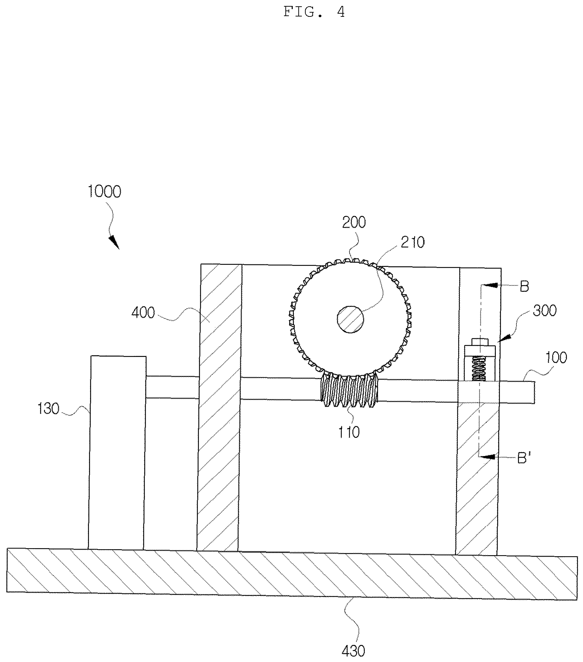

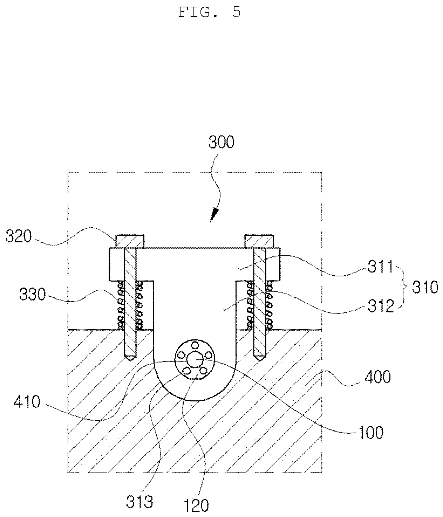

FIG. 3 is a front view of the worm gear assembly 1000 according to an exemplary embodiment of the present invention. FIG. 4 is a cross-sectional view taken along line AA' of FIG. 3. FIG. 5 is a cross-sectional view taken along line BB' of FIG. 4. Referring to FIGS. 3 to 5, The worm gear assembly 1000 according to the first embodiment of the present invention may further include a bearing 120 that is formed to surround an outer surface of the worm shaft 100 at one side in the longitudinal direction of the worm shaft 100 and a driver body 400 that accommodate the worm shaft 100 and the worm wheel 200 therein and is configured in such a way that a worm shaft support groove 410 accommodate the bearing 120 at one side of the worm shaft 100 in the longitudinal direction of the worm shaft 100.invention In this case, the driver body 400 may be integrated into the lower plate 430 above the lower plate 430, in which case a motor 130 for transmitting driving force to the worm shaft 100 through the other side of the worm shaft 100, and components such as a motor for adjusting an azimuth of the antenna 10, and a controller at the other side of the driver body 400.

the driver body 400 may include shaft coupling grooves 420 that is configured that opposite sides of the drive shaft 210 extended in a longitudinal direction of the drive shaft 210 are fixedly inserted thereinto. In this case, the shaft coupling grooves 420 may be positioned above the worm shaft 100, and thus, the worm wheel 200 may be installed above the worm shaft 100.

The backlash control structure 300 may pressurize the worm shaft 100 toward the worm wheel 200 to push the worm shaft 100 and the worm wheel 200 toward each other and to reduce a backlash, and may include a bearing housing 310 including an upper housing 311 disposed at an upper end of one side of the driver body 400 and extending in the longitudinal direction of the drive shaft 210 by a predetermined length and a lower housing 312 integrated into the upper housing 311 and having a bearing coupling hole 313 with the bearing 120 of the worm shaft 100 inserted thereinto and coupled thereto, and an elastic adjustment bolt 320 formed through from an upper end to a lower end of the upper housing 311 to be coupled to an upper end of one side of the driver body 400 and to prevent the bearing housing 310 from being separated, and an elastic spring 330 formed to surround an outer surface of the elastic adjustment bolt 320 and disposed between a lower end of the upper housing 311 and an upper end of one side of the driver body 400. In this case, in the backlash control structure 300, the bearing 120 of the worm shaft 100 may be coupled to the bearing housing 310 and may be fixed to the driver body 400 to prevent the worm shaft 100 from being separated from the driver body 400 and to simultaneously transmit elastic force to the worm shaft 100 and thus a backlash may be advantageously adjusted to push the worm shaft 100 and the worm wheel 200 toward each other. In addition, in the backlash control structure 300, the elastic adjustment bolt 320 may couple the bearing housing 310 to the driver body 400 and may adjust a coupling length of the elastic adjustment bolt 320 to adjust elastic force transmitted to the worm wheel 200 from the elastic spring 330, and thus, a minimum value of a backlash between the worm 110 and the worm wheel 200 may be adjusted to prevent the worm 110 and the worm wheel 200 from forcibly contacting each other and being engaged with each other.

The backlash control structure 300 may further include a separation prevention ring 340 that is coupled to surround an outer surface of the worm shaft 100 at an outer side of the bearing 120 and prevents the bearing 120 from being separated, and the separation prevention ring 340 may be formed inside and outside the driver body 400 to prevent the bearing 120 from being separated inward or outward. The separation prevention ring 340 may be formed to have elasticity and thus may be coupled to the worm shaft 100 and may not flow in the longitudinal direction of the worm shaft 100, and in detail, the separation prevention ring 340 may be configured in the form of a washer ring that is partially open and is formed to be smaller than an external circumference of the worm shaft 100.

According to one aspect of the backlash control structure 300 according to the first embodiment of the present invention, the worm shaft support groove 410 of the driver body 400 may be formed to correspond to the lower housing 312 to allow the lower housing 312 of the bearing housing 310 to be inserted thereinto. In detail, the bearing 120 coupled to one side of the worm shaft 100 may be inserted into the bearing coupling hole 313 formed in the lower housing 312 of the bearing housing 310 and the lower housing 312 may be formed to be inserted into the worm shaft support groove 410, and in this case, the lower housing may be formed to correspond to the worm shaft support groove 410, and as shown in the drawings, may be formed with a circular shape with predetermined curvature and depth. In addition, the backlash control structure 300 configured above according to the first embodiment may be simply installed in the driver body 400 and may have high space efficiency. However, to install the backlash control structure 300 in a conventional worm gear assembly, it may be inconvenient to additionally perform processing for enlarging the worm shaft support groove 410 by as much as a size of the lower housing 312.

### <Second embodiment>

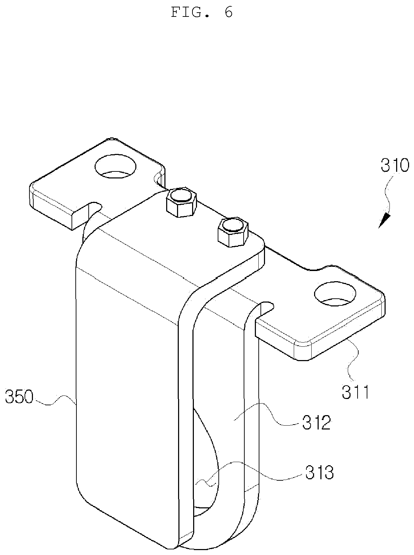

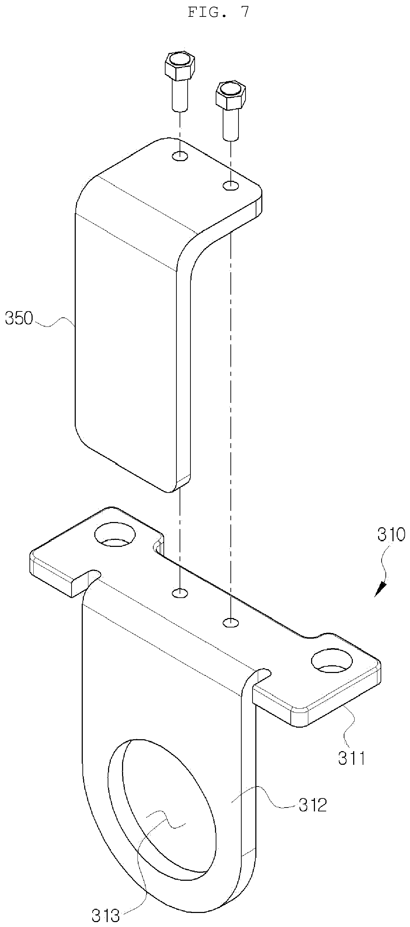

FIG. 6 is a perspective view showing the bearing housing 310 according to the second embodiment of the present invention. FIG. 7 is a coupled perspective view of the bearing housing shown in FIG. 6. Referring to FIGS. 6 and 7, in the backlash control structure 300, the lower housing 312 of the bearing housing 310 may be formed to be bent outward along an outer surface of the driver body 400 and may be formed to allow the bearing 120 of the worm shaft 100 to be inserted into the bearing coupling hole 313 of the lower housing 312. In this case, in the backlash control structure 300 configured above according to the second embodiment, processing for enlarging the worm shaft support groove 410 is advantageously not required in a conventional worm gear assembly to insert the lower housing 312 into the worm shaft support groove 410 according to the first embodiment. The bearing housing 310 may be formed along an outer surface of the driver body 400 to be coupled to an upper end of the driver body 400 to an external side, and thus, the bearing 120 of the worm shaft 100 may be separated outward from the worm shaft support groove 410 or may extend by a predetermined length to be inserted into the bearing coupling hole 313 of the bearing housing 310. In this case, even if the bearing 120 of the worm shaft 100 is separated from the worm shaft support groove 410, the bearing 120 is coupled to an upper end of the driver body 400 in the bearing housing 310, and thus, the worm shaft 100 may be prevented from dropping downward due to a weight thereof and a backlash between the worm 110 and the worm wheel 200 by the elastic spring 330 between an upper end of one side of the driver body 400 and a lower end of the upper housing 311 of the bearing housing 310 may be adjusted.

The backlash control structure 300 may include a bearing cover 350 that is screwed to an upper end of the upper housing 311 of the bearing housing 310, is spaced apart from an outer surface of the bearing housing 310, and extends along the outer surface of the bearing housing 310 to surround an outer side end portion of the worm shaft 100. The bearing cover 350 may be component for protecting the worm shaft 100 protruding outside the bearing housing 310 and may prevent the outer side end portion of the worm shaft 100 from contacting the antenna driver cover 40 surrounding the driver body 400 or from contacting wirings and components included in the antenna driver cover 40 which may interrupt rotation of the worm shaft 100.

In addition, the backlash control structure 300 configured above according to the second embodiment may be advantageously applied to the conventional worm gear assembly even if a processing for enlarging the worm shaft support groove 410 of the backlash control structure 300 according to the first embodiment is not performed, but in general, a laser processing method is used to process the bearing coupling hole 313 of the bearing housing 310, and in this regard, when the bearing coupling hole 313 of bearing housing 310 is processed using a processing method using the laser processing method, laser processing may be started from an external side surface of the lower housing 312 of the bearing housing 310, and thus, it may be difficult to process the bearing coupling hole 313 formed in the lower housing 312 of the bearing housing 310, and accordingly, there may be a problem in that durability of the bearing housing 310 is degraded.

### <Third embodiment>

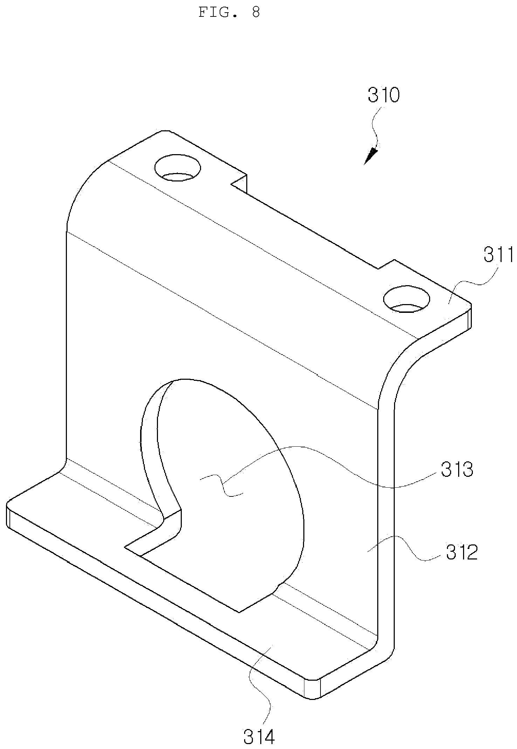

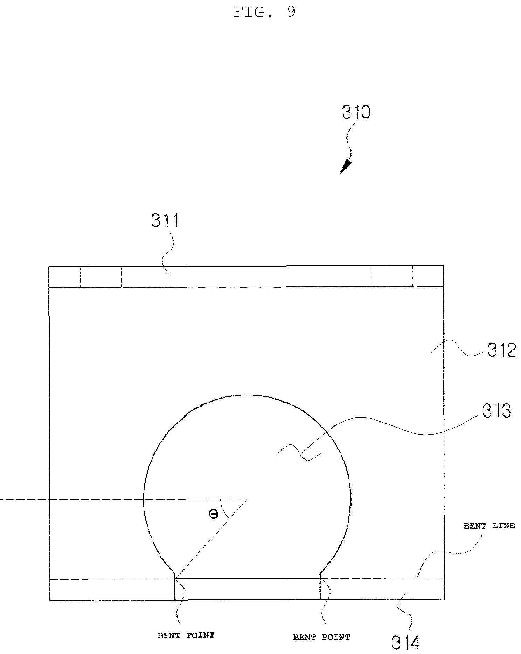

FIG. 8 is a perspective view of the bearing housing 310 of the backlash control structure 300 according to the third embodiment of the present invention. FIG. 9 is a front view of the bearing housing 310 of FIG. 8. Referring to FIGS. 8 to 9, the bearing housing 310 according to the third embodiment of the present invention may further include the bent end 314 formed by bending a portion of a lower portion of the lower housing 312 in an external direction of the driver body 400. In this case, the bent end 314 may be formed to extend outside the driver body 400 by a predetermined distance from the lower portion of the lower housing 312.

The bearing housing 310 may be formed in such a way that the bearing coupling hole 313 extends by a predetermined distance in an external direction from a bent line of the lower housing 312, along which the bent end 314 of the lower housing 312 is bent, to accommodate the external side portion of the worm shaft 100. In this case, when the bearing coupling hole 313 of the lower housing 312 is processed, laser processing begins on the bent line at which the lower housing 312 and the bent end 314 contact each other and is performed on the bearing coupling hole 313 formed in the lower housing 312 and the bent end 314 to overcome the problems in the first and second embodiments.

The bearing housing 310 configured above according to the third embodiment of the present invention may be configured in such a way that a lower side portion of the lower housing 312 is partially open, and thus, bearing power for pressurizing the worm shaft 100 in a direction toward the worm wheel 200 may be weakened, and thus, the bearing housing 310 may be formed in a such way that an angle θ between a bent point of the bearing coupling hole 313 and an imaginary line in the longitudinal direction of the drive shaft 210 from a circle center of the bearing coupling hole 313 is sufficiently large to support the bearing 120 of the worm shaft 100. When the angle θ is excessively small, the bearing 120 of the worm shaft 100 is not capable of sufficiently supporting the worm shaft 100, and thus, the bearing 120 may be separated from the bearing housing 310. As the angle θ is increased, bearing force of the bearing 120 of the worm shaft 100 is increased, but it is difficult to set a processing start point during laser processing of the bearing coupling hole 313. When the angle θ is excessively large, there is a problem in that an external side end portion of the worm shaft 100 is not capable of being accommodated in the bearing coupling hole 313 formed in the bent end 314, and thus, the angle θ may be calculated in consideration of a diameter of the bearing 120, a length of one side end of the worm shaft 100 protruding outside the lower housing 312, and a diameter of the worm shaft 100 to sufficiently support the bearing 120 and to accommodate the external side end portion of the worm shaft 100 by the bent end 314, and in more detail, the angle θ may be between 40° and 45°.

The worm gear assembly 1000 configured above according to the present invention may advantageously prevent vibration of a backlash due to inertia of the antenna 10 along with driving of the worm gear assembly 1000 by installing the backlash control structure 300 disposed at one side of the worm shaft 100 on the driver body 400 to couple the worm shaft 100 to the driver body 400 and applying elastic force to push the worm 110 of the worm shaft 100 and the worm wheel 200 toward each other to appropriately adjust a backlash formed between the worm 110 and the worm wheel 200. The present invention is not limited to the above exemplary embodiments, may be applied to various fields, and may be variously modified without departing from the scope and spirit of the present invention.

According to the present invention configured above, elastic force based on vibration from a backlash between a worm and a worm wheel may be applied through the backlash control structure disposed at one side of the worm shaft to push the worm and the worm wheel toward each other to adjust the backlash.

The backlash control structure disposed in the body to which the worm shaft is coupled may apply elastic force to prevent the worm shaft from being separated and to simultaneously adjust the backlash, may be relatively economical because the additional processing or space is not required to adjust the backlash, and a minimized worm gear assembly may be provided.

## Claims

1. A worm gear assembly having a backlash control structure, comprising:
a worm shaft (100) including a worm (110);
a worm wheel (200) installed on a drive shaft (210) disposed to be perpendicular to a longitudinal direction of the worm shaft (100) and formed to be engaged with the worm (110); and
a backlash control structure (300) that is disposed at one side in the longitudinal direction of the worm shaft (100) and pressurizes the worm shaft (100) in a direction toward the worm wheel (200) to push the worm (110) and the worm wheel (200) toward each other.

2. The worm gear assembly of claim 1, wherein the worm gear assembly further includes:
a bearing (120) that is formed to surround an outer surface of the worm shaft (100) at one side in the longitudinal direction of the worm shaft (100); and
a driver body (400) that accommodates the worm shaft (100) and the worm wheel (200) therein and is configured in such a way that a worm shaft support groove (410) accommodates the bearing (120) at one side of the worm shaft (100) in the longitudinal direction of the worm shaft (100).

3. The worm gear assembly of claim 2, wherein the driver body (400) includes shaft coupling grooves (420) that are configured that opposite sides of the drive shaft (210) extended in a longitudinal direction of the drive shaft (210) are fixedly inserted thereinto.

4. The worm gear assembly of claim 2 or 3, wherein the backlash control structure (300) includes:
a bearing housing (310) including an upper housing (311) disposed at an upper end of one side of the driver body 400 and extending in the longitudinal direction of the drive shaft (210) by a predetermined length and a lower housing (312) integrated into the upper housing (311) and having a bearing coupling hole (313) with the bearing (120) of the worm shaft (100) inserted thereinto and coupled thereto;
an elastic adjustment bolt (320) formed through from an upper end to a lower side of the upper housing (311) to be coupled to an upper end of one side of the driver body (400) and to prevent the bearing housing (310) from being separated; and
an elastic spring (330) formed to surround an outer surface of the elastic adjustment bolt (320) and disposed between a lower end of the upper housing (311) and an upper end of one side of the driver body (400).

5. The worm gear assembly of claim 4, wherein the backlash control structure (300) further includes a separation prevention ring (340) that is coupled to surround an outer surface of the worm shaft (100) at an outer side of the bearing (120) and prevents the bearing (120) from being separated.

6. The worm gear assembly of claim 4 or 5, wherein the backlash control structure (300) is configured in such a way that a worm shaft support groove (410) of the driver body (400) is formed to correspond to the lower housing (312) to allow the lower housing (312) of the bearing housing (310) to be inserted thereinto.

7. The worm gear assembly of any of claims 4 to 6, wherein the backlash control structure (300) is configured in such a way that the lower housing (312) of the bearing housing (310) is formed to be bent outward along an outer surface of the driver body (400) and is formed to allow the bearing (120) of the worm shaft (100) to be inserted into the bearing coupling hole (313) of the lower housing (312).

8. The worm gear assembly of any of claims 4 to 7, wherein the bearing housing (310) further includes a bearing cover (350) that is screwed to an upper end of the upper housing (311), is spaced apart from an outer surface of the bearing housing (310), and extends along the outer surface of the bearing housing (310) to surround an outer side end portion of the worm shaft (100).

9. The worm gear assembly of claim 7 or 8, wherein the bearing housing (310) further includes a bent end (314) formed by bending a portion of a lower portion of the lower housing (312) in an external direction of the driver body (400).

10. The worm gear assembly of claim 9, wherein the bearing housing (310) is configured in such a way that the bearing coupling hole (313) extends by a predetermined distance in an external direction from a bent line of the lower housing (312), along which the bent end (314) of the lower housing (312) is bent, to accommodate an external side portion of the worm shaft (100).

11. The worm gear assembly of claim 10, wherein an angle θ between a bent point of the bearing coupling hole (313) and an imaginary line in the longitudinal direction of the drive shaft (210) from a circle center of the bearing coupling hole (313) is calculated in consideration of a diameter of the bearing (120), a length of an external side end of the worm shaft (100) protruding outside the lower housing (312), and a diameter of the worm shaft (100).

12. A pop-up antenna including the worm gear assembly having the backlash control structure of any one of claims 1 to 11, comprising:
an antenna (10) for collecting a satellite signal; and
a low noise block down converter, LNB, (20) for receiving a signal from the antenna,
wherein the antenna (10) and the LNB (20) are coupled to opposite side ends of the drive shaft (210) of the worm gear assembly, and an elevation of the antenna (10) and the LNB (20) is adjusted by driving of the worm gear assembly.
